# EUROPÄISCHE PATENTSCHRIFT

(11) **EP 3 030 822 B1**
(45) Veröffentlichungstag und Bekanntmachung des Hinweises auf die Patenterteilung: **22.11.2017**
(21) Anmeldenummer: 14747831.7
(22) Anmeldetag: 14.07.2014
(51) Int. Cl.: F16L 55/46

(54) **VORRICHTUNG ZUR MOLCHHANDHABUNG**
PIG HANDLING DEVICE
DISPOSITIF DE MANIPULATION DE RACLEURS

(30) Priorität: 09.08.2013 DE 102013013220
(43) Veröffentlichungstag der Anmeldung: 15.06.2016
(73) Patentinhaber: GEA Tuchenhagen GmbH, 21514 Büchen (DE)
(72) Erfinder: BURMESTER, Jens, 23883 Grambek (DE)
(74) Vertreter: Hauck Patentanwaltspartnerschaft mbB
(86) Internationale Anmeldenummer: PCT/EP2014/001927
(87) Internationale Veröffentlichungsnummer: WO 2015/018477

(56) Entgegenhaltungen:
- WO-A1-95/33952
- DE-C1- 19 736 292
- DE-U1-202010 012 173
- GB-A- 2 430 019

## Beschreibung

Die Erfindung betrifft eine Vorrichtung zur Molchhandhabung nach dem Oberbegriff des Anspruchs 1.

Es besteht die generelle Forderung nach Minimierung von Produktverlusten in modernen Produktionsanlagen, insbesondere in der Milch- und Nahrungsmittelindustrie, in der Getränkeindustrie sowie in der sogenannten "Personal and Health Care"-Industrie. Darüber hinaus steigen die Anforderungen an die Abwasserqualität solcher Anlagen. Dem wird mit dem Einsatz so genannter Molchsysteme begegnet, mit denen ein Molch genannter Reinigungskörper durch das Leitungssystem der Produktionsanlage bewegt wird, um wertvolle, fließfähige Produkte ohne Vermischung mit anderen Medien aus den Leitungen auszuschieben. Vorrichtungen zu Molchhandhabung dienen der Automatisierung dieses Prozessschrittes.

Eine Molchstation, in der ein Molch aufbewahrt und zum gewünschten Zeitpunkt automatisiert in das Rohrleitungssystem abgegeben werden kann, ist in der WO 1995/033952 A1 vorgestellt. Dieser Stand der Technik schafft eine verbesserte Reinigungsfähigkeit der Molchstation. Er stellt dabei auf die Halterung des Molches in der Vorrichtung ab und ermöglicht insbesondere eine bessere Reinigung des Molches. Durch eine Halterung mit Spiel wird eine Beweglichkeit des Molches im Reinigungsmittelstrom erreicht, sodass die vollständige Oberfläche des Molches gereinigt wird. Ein weiterer Gesichtspunkt in der WO 1995/033952 A1 ist die totraumfreie Gestaltung der Wandung des Innenraums der Vorrichtung, insbesondere durch eine strömungsgerecht geformte Innenraumkontur.

Eine produktdurchströmbare Molchstation, die als Sende- und Empfangsstation ausgebildet ist, ist in der DE 101 44 860 A1 gezeigt. Es wird vorgeschlagen, zwei koaxial zueinander angeordnete und molchdurchgängig gestaltete Anschlüsse vorzusehen. Der Molch wird innerhalb der Molchstation in seiner Beweglichkeit durch einen verstellbarer Fangbügel kontrolliert. Nachteilige Umlenkungen des Produktstromes werden vermieden und die Reinigbarkeit wird erhöht.

Die DE 94 12 043 U1 schlägt eine Molchstation vor, in welcher der Molch durch zwei steuerbare Anschläge in seiner umströmbaren Position festlegbar ist. Die Station weist neben einem ersten Rohrleitungsanschluss einen zweiten, seitlich angebrachten Rohrleitungsanschluss auf. Ziel ist es, Toträume zu reduzieren und so den Produktstrom durch die Molchstation zu verbessern.

In der DE 1 775 03 A wird eine Vorrichtung zum Auffangen einer innerhalb einer Pipeline bewegten Kugel vorgeschlagen. Die Vorrichtung weist einen mittels eines Schieberventils abtrennbaren Teil auf, in welchem die Kugel aufgenommen wird. Ziel ist es, die Kugel aus der Pipeline auf einfache und sichere Weise entnehmen zu können.
Weitere Molchstationen sind bekannt aus DE 197 36 292 C1, GB 2 430 019 A sowie DE 20 2010 012 173 U1.
Es ist daher Aufgabe der Erfindung, eine Vorrichtung zur Molchhandhabung mit verbesserter Reinigbarkeit der Vorrichtung zu schaffen.
Diese Aufgabe wird gelöst durch eine Vorrichtung mit den Merkmalen des Anspruchs 1. Die davon abhängigen Ansprüche 2 bis 16 geben vorteilhafte Weiterbildungen der Erfindung an.
Die Erfindung fußt auf der Grundüberlegung, neben der Molchoberfläche und der Innenraumkontur weitere Teile der Vorrichtung zur Molchhandhabung in die Betrachtung einzubeziehen. Im Innenraum der Vorrichtung befinden sich Handhabungselemente mit denen die Bewegungen des Molchs in diesem Innenraum gezielt beeinflusst werden. Ein solches Handhabungselement ist in der Regel aufgrund seiner Größe aus mehreren Teilen aufgebaut. Die Erfindung betrifft daher die Gestaltung eines aus einem Grundelement mit einer ersten Oberfläche und einem Funktionselement mit einer zweiten Oberfläche gebauten Handhabungselementes. Es ist vorgesehen, zwischen erster Oberfläche und zweiter Oberfläche eine konkav gewölbte Übergangsfläche mit einem Kernkrümmungsbereich anzuordnen, wobei Funktionselement und Grundelement außerhalb des Kernkrümmungsbereiches stoffschlüssig miteinander verbunden sind. Insbesondere bei winklig aufeinandertreffenden Oberflächen schafft eine konkave Übergangsfläche eine leicht zu reinigende Oberfläche des Handhabungselements, so dass anheftender Schmutz sicher entfernt werden kann. Der Stoffschluss liegt außerhalb des Bereiches, in dem erste und zweite Oberfläche im Winkel aufeinandertreffen. Der Oberflächenbereich eines Stoffschlusses muss möglichst glatt sein, um eine sichere Reinigbarkeit zu gewährleisten. Hierbei ist die Anordnung des Stoffschlusses außerhalb des Krümmungsbereiches von großem Vorteil, da auf diese Weise technisch sicher und kostengünstig eine glatte Oberfläche des Stoffschlusses hergestellt werden kann. Die Reinigbarkeit der Vorrichtung zur Molchhandhabung wird durch die erfindungsgemäße Maßnahme gegenüber dem Stand der Technik verbessert.

Dieser Vorteil kommt gemäß einer Weiterbildung noch besser zur Geltung, wenn erste und zweite Oberfläche in einem Winkel von weniger als 135° aufeinandertreffen und der Kernkrümmungsbereich einen Krümmungsradius von wenigstens 6,35mm aufweist.

Eine andere Weiterbildung schlägt vor, die Übergangsfläche am Grundelement anzuordnen und somit das Funktionselement zu vereinfachen. Zudem wird eine Materialersparnis, beispielsweise bei einem stangenförmigen Funktionselement, ermöglicht.

Die Erfindung lässt sich weiterentwickeln, indem das Grundelement einen Aufnahmehohlraum umfasst, in dem das Funktionselement abschnittsweise führend aufgenommen ist, wobei es dann von einem die Übergangsfläche aufweisenden Abschnitt umgeben ist. Hierdurch wird auf einfache Weise eine sehr gute Orientierung von Grundelement und Funktionselement zueinander vor dem Herstellen des Stoffschlusses erreicht.

Eine Weiterbildung betreffend die Übergangsfläche sieht vor, diese am Funktionselement anzuordnen. Hierdurch wird die Orientierung vor dem Schaffen des Stoffschlusses erleichtert, da nahe des Stoffschlusses eine auf diesen gerichtete Kraft eingeleitet werden kann. Zudem kann die Übergangsfläche genutzt werden, das Funktionselement am Stoffschluss zu verbreitern und so die Orientierung ebenfalls zu verbessern.

Gemäß einer anderen Weiterbildung ist vorgesehen, das Handhabungselement als Führungsanordnung auszubilden, wobei das Grundelement mit dem Gehäuse verbunden und das Funktionselement zum Führen des Molches in einem radialen Abstand zu einer den Hohlraum begrenzenden Wandfläche ausgebildet ist. Dies verhindert vorteilhaft das Anlagern des Molches an der Wandfläche. Hierdurch werden für Verunreinigungen anfällige und spitzwinklige Übergange von Molchoberfläche zu Wandfläche verhindert.

Das Funktionselement kann gemäß einer Ausführungsform wenigstens eine Stange umfassen, wodurch die zum Handhaben des Molches notwendige Berührung des Funktionselements und des Molches mit einer kleinen Kontaktfläche stattfindet. Zudem sind geometrisch einfache und dadurch gut zu reinigende Flächen geschaffen.

Die Reinigbarkeit der Vorrichtung kann zudem vereinfacht werden, in dem das Grundelement einstückig mit dem Gehäuse der Vorrichtung ausgeführt ist. Hierdurch werden Übergangsstellen zwischen Bauteilen vermieden, die aufwändig zu bearbeiten sind, um eine gute Reinigbarkeit zu gewährleisten.

Gemäß einer anderen Weiterbildung ist das Handhabungselement als Greifstruktur ausgebildet. Das Grundelement ist dabei als Befestigungskopf ausgeführt, an welchem das als eine oder mehrere als Greifarm geformte Stange(n) gestaltete Funktionselement angebracht ist. Solch ein Handhabungselement erlaubt die Handhabung, insbesondere Begrenzung, der Molchbewegungen in axialer und radialer Richtung auf einfache und sicher zu reinigende Weise. Der Befestigungskopf kann als Stopper in axialer Richtung wirken.

Diese Weiterbildung lässt sich im Hinblick auf eine technisch einfache Automatisierung durch einen druckmittelbetriebenen Greiferantrieb verbessern, mit welchem der Befestigungskopf verschiebbar ist.

Gemäß einer weiteren Weiterbildung umfasst die Vorrichtung in ihrem Innenraum neben dem ersten Handhabungselement ein zweites Handhabungselement, wobei eines davon als Führungsanordnung wie vorstehend beschrieben und das andere als Greifstruktur wie ebenfalls beschrieben ausgebildet ist. Dies verbessert einerseits die Führung und Handhabung des Molches und sorgt durch die vorbeschriebene Gestaltung von Führungsanordnung und Greifstruktur für eine gute Reinigbarkeit der Vorrichtung.

Diese unmittelbar zuvor beschriebene Weiterbildung wird verbessert, wenn Führungsanordnung und Greifstruktur so gestaltet sind, dass der Molch mit einem Spiel in ihnen aufnehmbar ist. Hierdurch wird das Ausbilden von ständigen Kontaktstellen verhindert und eine Reinigung aller Oberflächenteile ist gewährleistet.

Die Vorrichtung kann einen verschiebbaren Stopper umfassen, mit welchem der Molch im Zusammenwirken mit dem Handhabungselement sicher im Hohlraum gehalten wird, beispielsweise bei starken Reinigungsströmungen.

Eine kostengünstige Automatisierung der Vorrichtung ist mit Hilfe eines druckmittelbetriebenen Stopperantriebs gegeben, mit welchem der Stopper verschiebbar ist.

Die Vorrichtung kann einen zweiten Anschluss umfassen, der derart angeordnet ist, dass ein den im Hohlraum befindlichen Molch umspülender Fluidstrom ausbildbar ist. Hierdurch werden der Molch und das oder die Handhabungselement(e) im Fluidstrom zuverlässig gereinigt. Im Zusammenwirken mit dem vorbeschriebenen Spiel ergibt sich eine besonders gute Reinigung von Handhabungselement und Molch.

Eine weiterhin verbesserte Reinigbarkeit der Vorrichtung wird erzielt, wenn sämtliche in einem Winkel von weniger als 135° aufeinandertreffende und den Hohlraum begrenzende Wandflächen des Gehäuses mit einem Übergangsradius von wenigstens 6,35mm ineinander übergehen.

Anhand eines Ausführungsbeispiels und seiner Weiterbildungen sollen die Erfindung näher erläutert und die Darstellung der Wirkungen und Vorteile vertieft werden.
Es zeigen:
- **Fig. 1:**: Schnitt durch eine Vorrichtung zur Molchhandhabung mit einem darin befindlichen Molch;
- **Fig. 2:**: Schnitt durch eine Detailansicht F aus Fig. 1;
- **Fig. 3:**: Schnitt durch eine Detailansicht G aus Fig. 1 in einer zweiten Ausführung;
- **Fig. 4**: Schnitt durch eine Detailansicht G aus Fig. 1 in einer dritten Ausführung;
- **Fig. 5:**: Schnitt durch eine Detailansicht G aus Fig. 1 in einer vierten Ausführung;
- **Fig. 6:**: Schnitt durch eine Detailansicht G aus Fig. 1 in einer fünften Ausführung und
- **Fig. 7:**: Schnitt durch eine Detailansicht H aus Fig. 1.

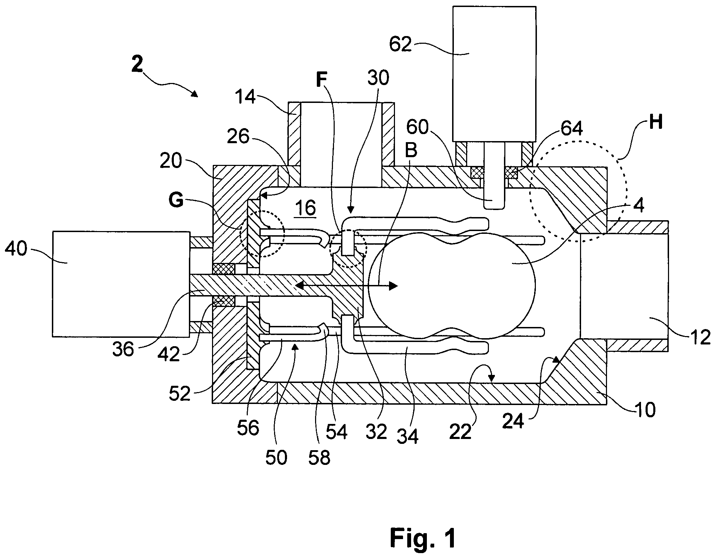

Es zeigt **Fig. 1** in einer geschnittenen Darstellung eine Vorrichtung 2 zur Handhabung eines Molches 4. Die Vorrichtung 2 besitzt ein Gehäuse 10 mit einem Hohlraum 16, welcher von einer seitlichen Wandfläche 22, einer schrägen Wandfläche 24 und einer rückwärtigen Wandfläche 26 begrenzt ist.

Ein erster Anschluss 12 ist am Gehäuse 10 vorgesehen und erlaubt es, die Vorrichtung 2 mit einer Rohrleitung eines Rohrleitungssystems einer Produktionsanlage zu verbinden. Im Hohlraum 16 ist der Molch 4 aufnehmbar, der durch den ersten Anschluss 12 hindurch in den Hohlraum 16 hinein oder hinaus gelangen kann. Der erste Anschluss 12 ist insbesondere hinsichtlich seines inneren Durchmessers auf den Durchmesser des Molches 4 abgestimmt. Der Durchmesser des Molches 4 wiederum ist auf den Innendurchmesser der Rohrleitung der Produktionsanlage abgestimmt, denn um Produkt möglichst effektiv aus der Rohrleitung zu entfernen, weichen diese Durchmesser nur geringfügig voneinander ab.

Am Gehäuse 10 ist ein zweiter Anschluss 14 vorgesehen. Mit dessen Hilfe kann die Vorrichtung 2 in den Produktionsweg der Produktionsanlage eingebaut werden. Während der Produktion durchströmt Produkt die Vorrichtung 2. Wenn das Produkt mit Hilfe des Molches 4 aus der Produktionsanlage entfernt werden soll, wird durch den zweiten Anschluss 14 ein Treibmedium in die Vorrichtung 2 eingelassen, welches nachfolgend den Molch 4 durch die Produktionsanlage schiebt. Außerdem wird der zweite Anschluss 14 genutzt, um Reinigungsmittel in den Hohlraum 16 der Vorrichtung 2 strömen zu lassen.

Ein erstes Handhabungselement ist als Greifstruktur 30 ausgeführt. Diese Greifstruktur 30 besitzt als Grundelement einen Befestigungskopf 32, an welchem ein Kranz von Greifarmen 34 angebracht ist, wobei die Greifarme 34 jeweils ein Funktionselement darstellen. Die Greifarme 34 sind so gestaltet, dass sie den Molch 4 an einer freien Bewegung in Richtung des ersten Anschlusses 12 hindern. Der Befestigungskopf 32 wirkt als Stoppmittel, um die Bewegung des Molches 4 vom ersten Anschluss 12 weg in Richtung zur rückwärtigen Wandfläche 26 hin zu begrenzen.

Die Greifstruktur 30 weist eine Greiferstange 36 auf, welche einen Rückteil 20 des Gehäuses 10 durchsetzt. Greiferstange 36 und Rückteil 20 des Gehäuses 10 sind mittels einer Dichtung 42 abgedichtet, um den Hohlraum 16 von der Umgebung der Vorrichtung 2 zu trennen. Die Greiferstange 36 wirkt mit einem Greiferantrieb 40 zusammen, welcher die Greifstruktur 30 entlang einer Bewegungsrichtung B in einer geradlinigen Bewegung hin und her bewegen kann. Der Greiferantrieb 40 ist als druckmittelbetriebener Antrieb ausgeführt. Mit Hilfe des Greiferantriebs 40 kann die Greifstruktur 30 zum Rückteil 20 des Gehäuses 10 bewegt werden, um den Molch 4 in eine Ruheposition zu bringen. Die Greifstruktur 30 kann in Richtung des ersten Anschlusses 12 bewegt werden, um den Molch 4 in eine Sendeposition zu bringen, in der er durch das Treibmittel aus der Vorrichtung 2 heraus in die Rohrleitung hinein gebracht werden kann, um eine Phase der Produktrückgewinnung durchzuführen.

Ein zweites Handhabungselement ist als Führungsanordnung 50 ausgeführt. Die Führungsanordnung 50 besitzt ein Grundelement 52, welches als ein Ring mit im Wesentlichen rechteckigen Querschnitt gestaltet ist. Dieser Ring ist mit dem Rückteil 20 des Gehäuses 10 verbunden. Um eine gute Reinigbarkeit zu gewährleisten, ist der Ring vorzugsweise bündig im Rückteil 20 versenkt, so dass seine Oberfläche mit der rückwärtigen Wandfläche 26 gleichmäßig abschließt. In einer Weiterbildung ist das Grundelement 52 einteilig mit dem Rückteil 20 des Gehäuses 10 ausgeführt.

An dem Grundelement 52 sind mehrere Führungsstangen 54 befestigt, die sich entlang der Bewegungsrichtung B erstrecken. Sie bilden einen Käfig, der die Berührung des Molches 4 und der seitlichen Wandfläche 22 in jeder Stellung der Greifstruktur 30 und des Molches 4 verhindern. Am Grundelement 52 sind außerdem mehrere Anschlagstangen 56 vorzugsweise in kreisförmiger Anordnung vorgesehen, die einen auf die Greiferstange 36 hingebogenen Endabschnitt 58besitzen. Diese Endabschnitte 58 bilden einen Anschlag für den Molch 4, wenn die Greifstruktur 30 in der zum Rückteil 20 zurückgezogenen Stellung steht.

Die Vorrichtung 2 besitzt ein weiteres Sicherungselement, mit dem der Molch 4 im Hohlraum 16 gehalten werden kann. Ein Stopper 60 durchsetzt die Wandung des Gehäuses 10 und ragt aus der seitlichen Wandfläche 22. An der Durchdringungsstelle befindet sich eine Dichtung 64, die die Wandfläche 22 und Stopper 60 gegeneinander abdichtet und so die Umgebung der Vorrichtung 2 vom Hohlraum 16 dauerhaft trennt. Der Stopper 60 ist mit einem Stopperantrieb 62 wirkverbunden. Mit Hilfe des Stopperantriebes 62 kann der Stopper 60 in einer geradlinigen Bewegung so weit in den Hohlraum 16 hineingefahren werden, dass der Molch 4 nicht mehr zum ersten Anschluss 12 gelangen kann. Der Stopper 60 kann mit dem Stopperantrieb 62 so weit zurückgezogen werden, dass der Molch aus dem Hohlraum 16 und durch den ersten Anschluss 12 in die Rohrleitung gelangen kann.

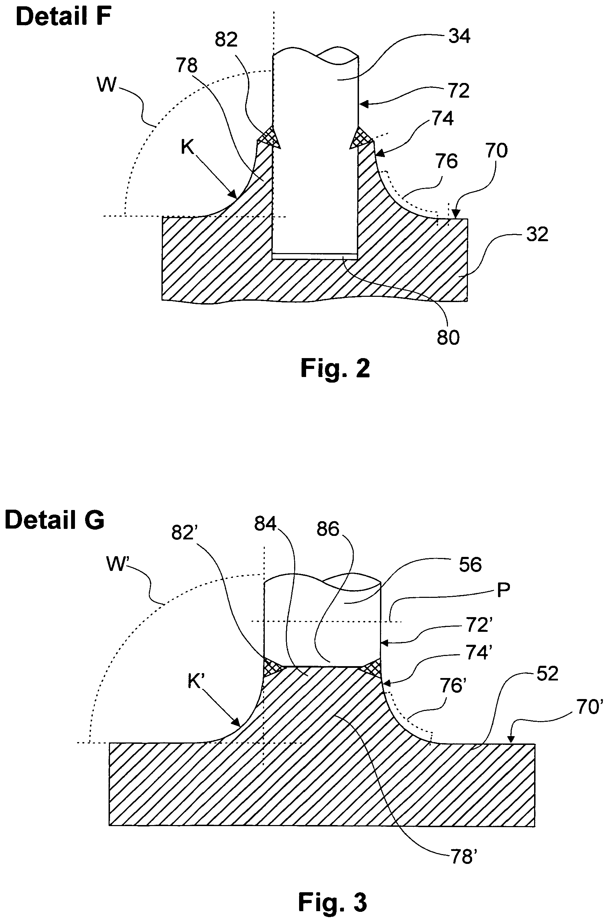

Die **Fig. 2** zeigt eine Ausgestaltungsmöglichkeit für einen Detailbereich F. Der Befestigungskopf 32 der Greifstruktur 30 ist im Teilschnitt jenes Bereiches dargestellt, in welchem ein Greifarm 34 mit dem Befestigungskopf 32 verbunden ist. Der Befestigungskopf 32 besitzt eine erste Oberfläche 70, während der Greifarm 34 eine zweite Oberfläche 72 aufweist. Die erste Oberfläche 70 bildet im Dreidimensionalen im Wesentlichen einen Zylinder. Die zweite Oberfläche 72 ist im dargestellten Bereich des Greifarmes 34 auch einen Zylinder, der senkrecht auf dem Zylinder der ersten Oberfläche 70 steht. Der kleinste Winkel, in dem erste und zweite Oberfläche 70 und 72 im Dreidimensionalen aufeinandertreffen, ist ein eingezeichneter Winkel W, der in diesem Beispiel rechtwinklig ist. Auf der ersten Oberfläche 70 ist ein von ihr vorstehender Abschnitt 78 vorgesehen, welcher einen Aufnahmehohlraum 80 besitzt. Der Abschnitt 78 umgibt den Greifarm 34 und der Aufnahmehohlraum 80 nimmt den Greifarm 34 formschlüssig auf.

Erste Oberfläche 70 und zweite Oberfläche 72 gehen mittels einer Übergangsfläche 74 ineinander über. Diese ist konkav gewölbt und besitzt einen Kernkrümmungsbereich 76 mit einem Krümmungsradius K. Der Kernkrümmungsbereich 76 ist der derjenige Teil der Übergangsfläche 74, in welchem die Wölbung deutlich ausgeprägt ist. Außerhalb des Kernkrümmungsbereiches 76 geht die Krümmung der Übergangsfläche 76 in die Krümmung von erster Oberfläche 70 oder zweiter Oberfläche 72 über. Der Krümmungsradius K beträgt gemäß Weiterbildung wenigstens 6,35 mm.

Greifarm 34 und Befestigungskopf 32 sind stoffschlüssig miteinander verbunden. Der Stoffschluss ist außerhalb des Kernkrümmungsbereichs 76 angeordnet, so dass sich der Übergang von erster Oberfläche 70 und zweiter Oberfläche 72 nicht in einem Bereich mit starker Oberflächenkrümmung befindet. Dies ist vorteilhaft, da die Krümmung nur an einem Bauteil ausgeführt werden muss und besonders genau herstellbar ist. Außerdem wird vermieden, dass die Übergangsfläche 74 in ihrem besonders gewölbten Bereich durch den Stoffschluss ungleichmäßig wird. Dies ist vorteilhaft in Bezug auf Herstellung und Reinigbarkeit.

Eine einfache und für die Anwendung in Lebensmitteltechnik und Feinchemie gut geeignete Form des Stoffschlusses ist eine Schweißnaht 82. Diese ist um den Greifarm 34 umlaufend ausgeführt und befindet sich am freien Ende des Abschnitts 78, an dem die Übergangsfläche 74 in die zweite Oberfläche 72 übergeht.

Der Übergang von zweiter Oberfläche 72 zu Übergangsfläche 74 kann, wie dargestellt, eine leichte Stufe besitzen. Durch eine Schweißnaht in einem Schweißprozess mit einem Schweißzusatzwerkstoff kann ein schräger Übergang zwischen zweiter Oberfläche 72 und Übergangsfläche 74 geschaffen werden. Die Schweißnaht kann poliert oder geschliffen sein, um ihre schmutzabweisenden Eigenschaften zu verbessern.

In **Fig. 1** ist die Verbindung zwischen Anschlagstange 56 und Grundelement 52 in gleicher Weise wie die anhand der **Fig. 2** erläuterte Verbindung von Greifarm 34 und Befestigungskopf 32 ausgeführt. Anhand der **Fig. 3** bis **Fig. 6** werden nun weitere Ausgestaltungsmöglichkeiten für den Detailbereich G gezeigt.

In **Fig. 3** ist ein Schnitt durch das im Wesentlichen ringförmige Grundelement 52 mit einer ersten Oberfläche 70' gezeigt. Es weist einen Abschnitt 78' auf, der sich auf der ersten Oberfläche 70' erhebt und ein stumpfes Ende 84 aufweist. Die im Wesentlichen zylindrische Anschlagstange 56 mit einer zweiten Oberfläche 72' sitzt mit ihrem Ende 86 auf dem stumpfen Ende 84 auf. Erste Oberfläche 70' und zweite Oberfläche 72' bilden einen Winkel W' von 90 Grad.

Am Abschnitt 78' ist die konkav gewölbte Übergangsfläche 74' vorgesehen, die einen Übergang von erster Oberfläche 70' in die zweite Oberfläche 72' schafft. Die Übergangsfläche 74' ist mit einem Kernkrümmungsbereich 76' versehen. Der Kernkrümmungsbereich 76' besitzt einen Krümmungsradius K', der vorzugsweise mindestens 6,35 mm beträgt. Außerhalb des Kernkrümmungsbereichs 76' sind das stumpfe Ende 84 des Grundelements 52 und das Ende 86 der Anschlagstange 56 stoffschlüssig miteinander verbunden. Dieser Stoffschluss kann durch Schweißen bewerkstelligt werden, wie es bei der Verbindung von Befestigungskopf 32 und Greifarm 34 in **Fig. 2** der Fall ist. Diese Ausführung besitzt einen besonders glatten Übergang von zweiter Oberfläche 72' in die Übergangsfläche 74'. Schweißverfahren ohne Einsatz von Schweißzusatzwerkstoffen können eingesetzt werden.

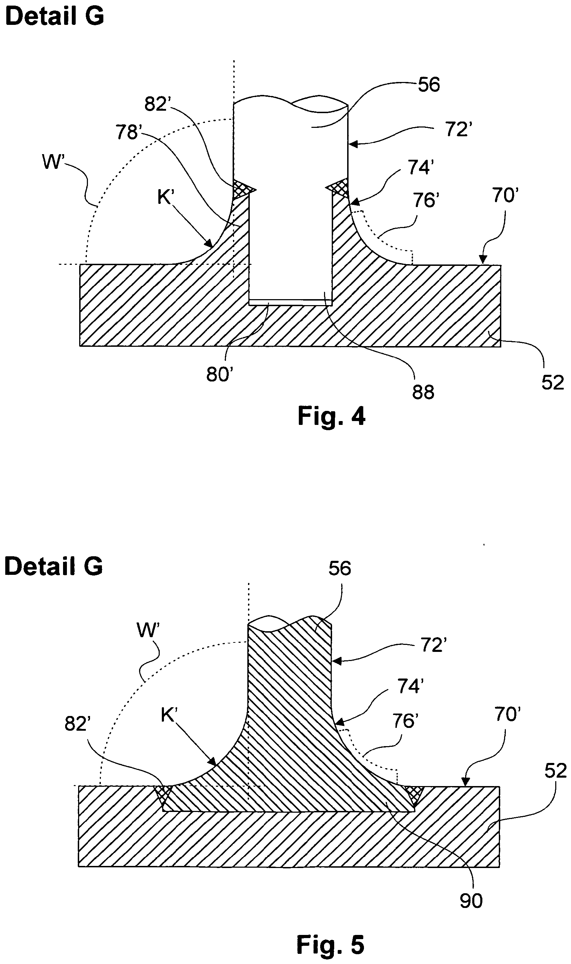

Die Ausführung nach **Fig. 4** weicht von derjenigen nach **Fig. 3** wie folgt ab. Die Anschlagstange 56 weist an ihrem Ende einen Stiftfortsatz 88 auf. Bei einer zylinderförmigen Stange kann dieser ein Stangenabschnitt mit verringertem Durchmesser sein. Dieser wird formschlüssig und vollständig in einem Aufnahmehohlraum 80' aufgenommen. Denkbar ist, den Formschluss derart weiterzubilden, dass sich die Anschlagstange 56 nicht im Aufnahmehohlraum 80' drehen kann.

Der Aufnahmehohlraum 80' ist im Abschnitt 78' vorgesehen und kann sich bis in das Grundelement 52 erstrecken. Durch die vollständige Aufnahme des Stiftfortsatzes 88 stoßen die zweite Oberfläche 72' der Anschlagstange 56 und die am Abschnitt 78' des Grundelements 52 befindliche Übergangsfläche 74' aneinander und bilden eine gemeinsame Oberfläche, die vorteilhaft absatzlos gestaltet sein kann. Der Stoffschluss in Form einer Schweißnaht 82' zwischen Grundelement 52 und Anschlagstange 56 ist an dem Übergang von zweiter Oberfläche 72' in die Übergangsfläche 70' geschaffen und befindet sich außerhalb des Kernkrümmungsbereichs 76'.

Besondere Vorteile dieser Ausführung liegen in dem leicht herstellbaren glatten Übergang von zweiter Oberfläche 72' in die Übergangsfläche 74' und der vereinfachten Orientierung von Grundelement 52 und Anschlagstange 56 zueinander vor Herstellung des Stoffschlusses.

In **Fig. 5** ist ein weiteres Ausführungsbeispiel für die Verbindung von Grundelement 52 und Anschlagstange 56 aus dem Detail G in **Fig. 1** im Schnitt dargestellt. Die Anschlagstange 56 besitzt einen Fuß 90, der einen gegenüber der Anschlagstange 56 erweiterten Querschnitt aufweist. Die Anschlagstange 56 besitzt die zweite Oberfläche 72', welche nahtlos in die Übergangsfläche 74' übergeht. Diese hat einen Kemkrümmungsbereich 76' mit einem Krümmungsradius K'. Die Übergangsfläche 74' befindet sich am Fuß 90. Der Fuß 90 wird von einer Ausnehmung am Grundelement 52 formschlüssig aufgenommen und ist dabei so im Grundelement 52 versenkt, dass die Übergangsfläche 74' in die erste Oberfläche 70' des Grundelements 52 vorzugsweise bündig übergeht. An der Übergangsstelle und außerhalb des Kernkrümmungsbereichs 76' ist eine Schweißnaht 82' zum Schaffen einer stoffschlüssigen Verbindung von Grundelement 52 und Anschlagstange 56 vorgesehen. Im dargestellten Beispiel ist der Winkel W' zwischen erster Oberfläche 70' und zweiter Oberfläche 72' rechtwinklig. Je nach Ausgestaltung der Führungsanordnung 50 kann ein kleinerer oder größerer Winkel W' notwendig sein. Besonderer Vorteil dieses Ausführungsbeispiels ist der große Durchmesser der Schweißnaht 82', die sowohl für die Orientierung der Bauteile zueinander vor Herstellen des Stoffschlusses als auch für die Belastbarkeit durch auf die Anschlagstange 56 einwirkende Hebelkräfte, beispielsweise parallel zur ersten Oberfläche 70', Vorteile bringt.

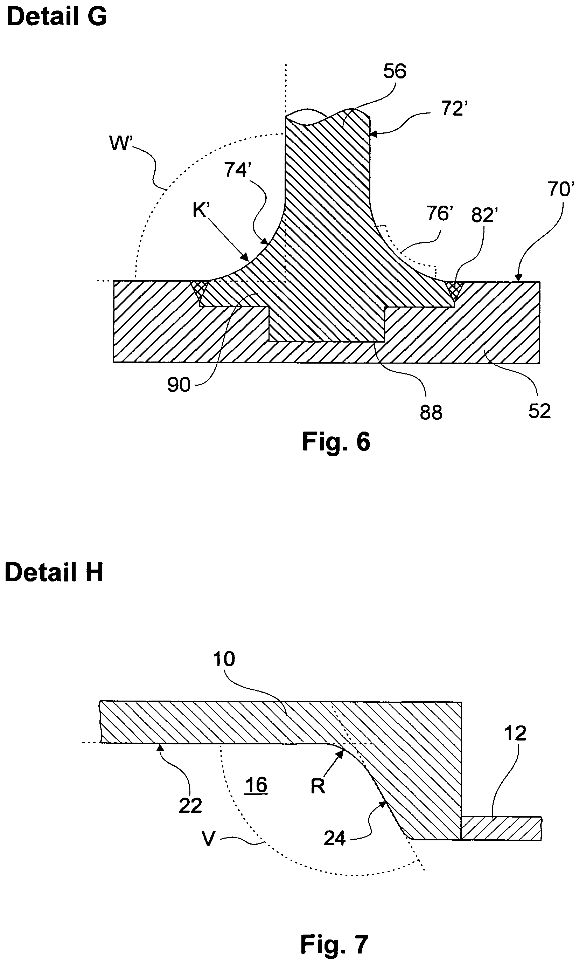

Eine Erweiterung der soeben beschriebenen Ausführungsform ist in einem Schnitt in **Fig. 6** dargestellt. Die Anschlagstange 56 mit der zweiten Oberfläche 72' weist an ihrem Ende eine Erweiterung in Form eines Fußes 90 auf. Auf der Seite des Fußes 90, der der Anschlagstange 56 gegenüberliegt, besitzt der Fuß 90 einen Stiftfortsatz 88. Stiftfortsatz 88 und Fuß 90 sind in einer Ausnehmung des Grundelements 52 aufgenommen. Die im Wesentlichen zylindrische zweite Oberfläche 72' geht in die konkav gewölbte Übergangsfläche 74' über, die einen Kernkrümmungsbereich 76' mit einem Krümmungsradius K' besitzt. Dieser beträgt vorteilhaft wenigstens 6,35mm. Fuß 90 und Stiftfortsatz 88 sind so tief im Grundelement 52 aufgenommen, dass die Übergangsfläche 74' mit einer Stufe von wenigen Zehntel Millimetern oder weniger in die erste Oberfläche 70' übergeht. Die Übergangsfläche 74' kann auch außerhalb des Kernkrümmungsbereiches 76' noch eine leichte Wölbung besitzen. Außerhalb des Kernkrümmungsbereiches 76'sind Grundelement 52 und Anschlagstange 56 stoffschlüssig durch eine Schweißnaht 82' miteinander verbunden.

Die anhand der **Fig. 3** bis **Fig. 6** gezeigten Verbindungen zwischen Grundelement 52 und Anschlagstange 56 sind auch für die Verbindung zwischen Grundelement 52 und Führungsstange 54 anwendbar.

Des Weiteren sind die anhand der **Fig. 2** bis **Fig. 6** dargestellten Gestaltungsmöglichkeiten für den Übergang von erster Oberfläche 70 und 70' zu zweiter Oberfläche 72 und 72' austauschbar verwendbar. Die für den Übergang an der Greifstruktur 30 gezeigte Ausführung ist für die Führungsanordnung 50 verwendbar und umgekehrt. Hierbei entspricht der Greifarm 34 der Anschlagstange 56 und der Befestigungskopf 32 dem Grundelement 52.

Vorteilhaft ist es, die Merkmale der **Fig. 2** bis **Fig. 6** auf alle in einem Winkel von weniger als 135° aufeinander stoßenden und im Hohlraum 16 befindlichen Grundelemente 32, 52 und Funktionselemente 34, 54 und 56 anzuwenden.

In **Fig. 7** ist ein in **Fig. 1** mit H bezeichnete Ausschnitt im Detail dargestellt. Die seitliche Wandfläche 22 und die schräge Wandfläche 24 begrenzen den Hohlraum 16 im Inneren des Gehäuses 10. Die schräge Wandfläche 22 geht vorteilhaft mit einem gerundeten Übergang in den ersten Anschluss 12 über. Die Wandflächen 22 und 24 stoßen in einem Winkel V aufeinander. Um die Baulänge der Vorrichtung 2 kurz zu halten, beträgt dieser Winkel V weniger als 135°. Ein Radius R von mindestens 6,35mm ist am Übergang der Wandflächen ineinander gebildet, so dass dieser Übergang gut reinigbar ist.

### Bezugszeichenliste der verwendeten Abkürzungen

- 2: Vorrichtung
- 4: Molch
- 10: Gehäuse
- 12: erster Anschluss
- 14: zweiter Anschluss
- 16: Hohlraum

- 20: Rückteil des Gehäuses
- 22: seitliche Wandfläche
- 24: schräge Wandfläche
- 26: rückwärtige Wandfläche

- 30: Greifstruktur
- 32: Befestigungskopf
- 34: Greifarm
- 36: Greiferstange
- 40: Greiferantrieb
- 42: Dichtung (Greifer)

- 50: Führungsanordnung
- 52: Grundelement
- 54: Führungsstange
- 56: Anschlagstange

- 60: Stopper
- 62: Stopperantrieb
- 64: Dichtung

- 70: erste Oberfläche
- 70': erste Oberfläche
- 72: zweite Oberfläche
- 72': zweite Oberfläche
- 74: Übergangsfläche
- 74': Übergangsfläche
- 76: Kernkrümmungsbereich
- 76': Kernkrümmungsbereich
- K: Krümmungsradius
- K': Krümmungsradius

- 78: Abschnitt
- 78': Abschnitt
- 80: Aufnahmehohlraum
- 80': Aufnahmehohlraum
- 82: Schweißnaht
- 82': Schweißnaht
- 84: stumpfes Ende
- 86: Ende
- 88: Stiftfortsatz
- 90: Fuß

- B: Bewegungsrichtung
- W: Winkel
- W': Winkel
- V: Winkel (Gehäuse)
- R: Übergangsradius
- P: Position

- F: Ansicht F
- G: Ansicht G
- H: Ansicht H

## Patentansprüche

1. Vorrichtung zur Molchhandhabung mit einem Gehäuse (10), einem im Gehäuse (10) befindlichen Hohlraum (16), in welchem ein Molch (4) aufnehmbar ist, einem Anschluss (12), mittels welchem der Hohlraum (16) mit einer Prozessanlage verbindbar ist und welcher zum Hindurchlassen des Molches (4) geeignet ist, und mit wenigstens einem in dem Hohlraum (16) angeordneten Handhabungselement (30, 50), welches zur Beeinflussung der Beweglichkeit des Molches (4) im Hohlraum (16) eingerichtet ist und welches wenigstens ein eine erste Oberfläche (70, 70') aufweisendes Grundelement (32, 52) und wenigstens ein im Hohlraum (16) mit dem Grundelement (32, 52) verbundenes und eine zweite Oberfläche (72, 72') besitzendes Funktionselement (34, 54, 56) aufweist, **dadurch gekennzeichnet, dass** das Handhabungselement (30, 50) eine zwischen erster Oberfläche (70, 70') und zweiter Oberfläche (72, 72') angeordnete und konkav gewölbte Übergangsfläche (74, 74') mit einem Kernkrümmungsbereich (76, 76') aufweist und Grundelement (32, 52) und Funktionselement (34, 54, 56) außerhalb des Kernkrümmungsbereiches (76, 76') stoffschlüssig miteinander verbunden sind.

2. Vorrichtung nach Anspruch 1, **dadurch gekennzeichnet, dass** erste und zweite Oberfläche (70, 70', 72') einen Winkel (W, W') von weniger als 135° miteinander bilden und der Kernkrümmungsbereich (76, 76') einen Krümmungsradius (K, K') von wenigstens 6,35 mm aufweist.

3. Vorrichtung nach Anspruch 1 oder 2, **dadurch gekennzeichnet, dass** die Übergangsfläche (74, 74') am Grundelement (32, 52) angeordnet ist.

4. Vorrichtung nach Anspruch 3, **dadurch gekennzeichnet, dass** das Grundelement (32, 52) einen Aufnahmehohlraum (80, 80') umfasst, in dem das Funktionselement (34, 54, 56) aufgenommen und von einem die Übergangsfläche (74, 74') aufweisenden Abschnitt (78, 78') umgeben ist.

5. Vorrichtung nach Anspruch 2, **dadurch gekennzeichnet, dass** die Übergangsfläche (74, 74') am Funktionselement (34, 54, 56) angeordnet ist.

6. Vorrichtung nach einem der vorhergehenden Ansprüche, **dadurch gekennzeichnet, dass** das Handhabungselement (30, 50) als Führungsanordnung (50) ausgebildet ist, wobei das Grundelement (52) mit dem Gehäuse (10) verbunden und das Funktionselement (54, 56) zum Führen des Molches (4) in einem radialen Abstand zu einer den Hohlraum begrenzenden Wandfläche (22) ausgebildet ist.

7. Vorrichtung nach Anspruch 6, **dadurch gekennzeichnet, dass** das Funktionselement (54, 56) eine Stange umfasst.

8. Vorrichtung nach Anspruch 6 oder 7, **dadurch gekennzeichnet, dass** das Grundelement (52) einstückig mit dem Gehäuse (10) ausgeführt ist

9. Vorrichtung nach einem der Ansprüche 1 bis 5, **dadurch gekennzeichnet, dass** das Handhabungselement als Greifstruktur (30) ausgebildet ist, wobei das Grundelement einen Befestigungskopf (32) und das Funktionselement eine als Greifarm (34) geformte Stange umfasst.

10. Vorrichtung nach Anspruch 9, **dadurch gekennzeichnet, dass** ein druckmittelbetriebener Greiferantrieb (40) vorgesehen ist, mit welchem der Befestigungskopf (32) verschiebbar ist.

11. Vorrichtung zur Molchhandhabung nach Anspruch 1,
**dadurch gekennzeichnet, dass** die Vorrichtung (2) ein erstes Handhabungselement und ein zweites Handhabungselement aufweist, wobei das erste Handhabungselement als Führungsanordnung (50) nach einem der Ansprüche 6 bis 8 und das zweite Handhabungselement als Greifstruktur (30) nach einem der Ansprüche 9 und 10 ausgebildet ist.

12. Vorrichtung nach Anspruch 11, **dadurch gekennzeichnet, dass** die Führungsanordnung (50) und die Greifstruktur (30) so gestaltet sind, dass der Molch (4) mit einem Spiel aufnehmbar ist.

13. Vorrichtung nach einem der vorhergehenden Ansprüche, **dadurch gekennzeichnet, dass** wenigstens ein verschiebbarer Stopper (60) vorgesehen ist, mit welchem der Molch (4) im Zusammenwirken mit dem Handhabungselement im Hohlraum (16) festlegbar ist.

14. Vorrichtung nach Anspruch 13, **dadurch gekennzeichnet, dass** ein druckmittelbetriebener Stopperantrieb (62) vorgesehen ist, mit welchem der Stopper (60) verschiebbar ist.

15. Vorrichtung nach einem der vorhergehenden Ansprüche, **dadurch gekennzeichnet, dass** ein zweiter Anschluss (14) vorgesehen und derart angeordnet ist, dass ein den im Hohlraum (16) befindlichen Molch (4) umspülenden Fluidstrom ausbildbar ist.

16. Vorrichtung nach einem der vorhergehenden Ansprüche, **dadurch gekennzeichnet, dass** sämtliche in einem Winkel (V) von weniger als 135° aufeinandertreffende und den Hohlraum (16) begrenzende Wandflächen (22, 24, 26) des Gehäuses (10) mit einem Übergangsradius (R) von wenigstens 6,35 mm ineinander übergehen.

## Claims

1. A pig handling device with a housing (10), a cavity (16) which can be found in the housing (10) and in which a pig (4) can be received, a connection (12) by means of which the cavity (16) can be connected to a processing system and which is suitable for allowing the pig (4) to pass through, and with at least one handling element (30, 50) which is arranged in the cavity (16), is designed to influence the mobility of the pig (4) in the cavity (16), and has at least one base element (32, 52) that has a first surface (70, 70') and at least one functional element (34, 54, 56) that is connected to the base element (32, 52) in the cavity (16) and has a second surface (72, 72'), **characterized in that** the handling element (30, 50) has a concavely curved transition surface (74, 74'), which is arranged between the first surface (70, 70') and the second surface (72, 72') and which comprises a core curvature region (76, 76'), and the base element (32, 52) and the functional element (34, 54, 56) are bonded to one another outside of the core curvature region (76, 76').

2. The device according to claim 1, **characterized in that** the first and second surface (70, 70', 72') together form an angle (W, W') of less than 135° and the core curvature region (76, 76') has a curvature radius (K, K') of at least 6.35 mm.

3. The device according to claim 1 or 2, **characterized in that** the transition surface (74, 74') is arranged on the base element (32, 52).

4. The device according to claim 3, **characterized in that** the base element (32, 52) comprises a receiving cavity (80, 80'), in which the functional element (34, 54, 56) is received and surrounded by a section (78, 78') having the transition surface (74, 74').

5. The device according to claim 2, **characterized in that** the transition surface (74, 74') is arranged on the functional element (34, 54, 56).

6. The device according to one of the previous claims, **characterized in that** the handling element (30, 50) is designed as a guiding arrangement (50), wherein the base element (52) is connected with the housing (10) and the functional element (54, 56) is designed to guide the pig (4) at a radial distance to a wall surface (22) delimiting the cavity.

7. The device according to claim 6, **characterized in that** the functional element (54, 56) comprises a rod.

8. The device according to claim 6 or 7, **characterized in that** the base element (52) is designed as one piece with the housing (10).

9. The device according to one of claims 1 to 5, **characterized in that** the handling element is designed as a gripping structure (30), wherein the base element comprises a fastening head (32) and the functional element comprises a rod shaped like a gripping arm (34).

10. The device according to claim 9, **characterized in that** a pressurizing-medium-driven gripper drive (40) is provided, with which the fastening head (32) is shiftable.

11. The pig handling device according to claim 1, **characterized in that** the device (2) has a first handling element and a second handling element, wherein the first handling element is designed as a guiding arrangement (50) according to one of claims 6 to 8 and the second handling element is designed as a gripping structure (30) according to one of claims 9 and 10.

12. The device according to claim 11, **characterized in that** the guiding arrangement (50) and the gripping structure (30) are designed such that the pig (4) is receivable with play.

13. The device according to one of the previous claims, **characterized in that** at least one shiftable stopper (60) is provided, with which the pig (4) in cooperation with the handling element is fixable in the cavity (16).

14. The device according to claim 13, **characterized in that** a pressurizing-means-driven stopper drive (62) is provided, with which the stopper (60) is shiftable.

15. The device according to one of the previous claims, **characterized in that** a second connection (14) is provided and arranged such that a fluid flow flowing around the pig (4) located in the cavity (16) is designable.

16. The device according to one of the previous claims, **characterized in that** all wall surfaces (22, 24, 26) of the housing (10) converging at an angle (V) of less than 135° and delimiting the cavity (16) transition into each other with a transition radius (R) of at least 6.35 mm.

## Revendications

1. Dispositif de manipulation de racleurs, avec un boîtier (10), une cavité (16) se trouvant dans le boîtier (10) dans laquelle un racleur (4) peut être logé, un raccordement (12), à l'aide duquel la cavité (16) peut être raccordée à un équipement de traitement et qui est apte pour laisser passer le racleur (4), et avec au moins un élément de manipulation (30, 50) disposé dans la cavité (16), qui est configuré pour influencer la mobilité du racleur (4) dans la cavité (16) et qui comporte au moins un élément de base (32, 52) comportant une première surface (70, 70') et au moins un élément fonctionnel (34, 54, 56) raccordé a l'élément de base (32, 52) dans la cavité (16) et possédant une deuxième surface (72, 72'), **caractérisé en ce que** l'élément de manipulation (30, 50) comporte une surface de transition (74, 74'), disposée entre la première surface (70, 70') et la deuxième surface (72, 72') et incurvée de façon concave avec une zone de courbure centrale (76, 76'), et que l'élément de base (32, 52) et l'élément fonctionnel (34, 54, 56) sont reliés l'un à l'autre par liaison de matière en dehors de la zone de courbure centrale (76, 76').

2. Dispositif selon la revendication 1, **caractérisé en ce que** les surfaces première et deuxième (70, 70', 72') forment un angle (W, W') entre eux de moins que 135°, et la zone de courbure centrale (76, 76') a un rayon de courbure (K, K') d'au moins 6,35 mm.

3. Dispositif selon la revendication 1 ou 2, **caractérisé en ce que** la surface de transition (74, 74') est disposée dans l'élément de base (32, 52).

4. Dispositif selon la revendication 3, **caractérisé en ce que** l'élément de base (32, 52) comporte une cavité de logement (80, 80') dans laquelle l'élément fonctionnel (34, 54, 56) est logé et entouré d'une section (78, 78') qui comporte la surface de transition (74, 74').

5. Dispositif selon la revendication 2, **caractérisé en ce que** la surface de transition (74, 74') est disposée sur l'élément fonctionnel (34, 54, 56).

6. Dispositif selon l'une quelconque des revendications précédentes, **caractérisé en ce que** le dispositif de manipulation (30, 50) est réalisé comme un dispositif de guidage (50), l'élément de base (52) étant raccordé au boîtier (10) et l'élément fonctionnel (54, 56) pour guider le racleur (4) étant réalisé en une distance radiale à une surface de paroi (22) qui délimite la cavité.

7. Dispositif selon la revendication 6, **caractérisé en ce que** l'élément fonctionnel (54, 56) comporte une perche.

8. Dispositif selon la revendication 6 ou 7, **caractérisé en ce que** l'élément de base (52) est fait en une seule pièce avec le boîtier (10).

9. Dispositif selon l'une quelconque des revendications 1 à 5, **caractérisé en ce que** le dispositif de manipulation est réalisé comme une structure de préhension (30), l'élément de base comportant une tête de fixation (32), et l'élément fonctionnel une perche formée comme un bras préhenseur (34).

10. Dispositif selon la revendication 9, **caractérisé en ce qu'**un dispositif d'entraînement du préhenseur (40) mû par un fluide sous pression est prévu par lequel la tête de fixation (32) peut être déplacée.

11. Dispositif de manipulation de racleurs selon la revendication 1, **caractérisé en ce que** le dispositif (2) comporte un premier élément de manipulation et un deuxième élément de manipulation, le premier élément de manipulation étant formé comme un dispositif de guidage (50) selon une des revendications 6 à 8, et le deuxième élément de manipulation comme une structure de préhension (30) selon une des revendications 9 et 10.

12. Dispositif selon la revendication 11, **caractérisé en ce que** le dispositif de guidage (50) et la structure de préhension (30) sont configurés tellement que le racleur (4) peut être logé avec jeu.

13. Dispositif selon l'une quelconque des revendications précédentes, **caractérisé en ce qu'**au moins un arrêt (60) coulissant est prévu, par lequel le racleur (4) peut être fixé dans la cavité (16) en coopération avec l'élément de manipulation.

14. Dispositif selon la revendication 13, **caractérisé en ce qu'**un entraînement d'arrêt (62) mû par un fluide sous pression est prévu par lequel l'arrêt (60) peut être coulissé.

15. Dispositif selon l'une quelconque des revendications précédentes, **caractérisé en ce qu'**un deuxième raccordement (14) est prévu et arrangé tellement qu'un courant de fluide rinçant le racleur (4) qui se trouve dans la cavité (16) peut être formé.

16. Dispositif selon l'une quelconque des revendications précédentes, **caractérisé en ce que** toutes les surfaces murales (22, 24, 26) du boîtier (10) qui se rencontrent en un angle (V) de moins que 135° et délimitent la cavité (16) se fondent avec un rayon de transition (R) d'au moins 6,35 mm.
